# FASCICULE DE BREVET EUROPEEN

(11) **EP 1 166 070 B1**
(45) Date de publication et mention de la délivrance du brevet: **26.01.2011**
(21) Numéro de dépôt: 00915214.1
(22) Date de dépôt: 22.03.2000
(51) Int. Cl.: G01L 5/28

(54) **PROCEDE DE CONTROLE DE LA FONCTION ANTI-BLOCAGE DE ROUES DE VEHICULE AUTOMOBILE**
VERFAHREN ZUR KONTROLLE DER ANTIBLOCKIERSCHUTZFUNKTION IN EINEM FAHRZEUG
METHOD FOR CONTROLLING A WHEEL ANTI-BLOCKING FUNCTION IN A MOTOR VEHICLE

(30) Priorité: 26.03.1999 FR 9903826
(43) Date de publication de la demande: 02.01.2002
(73) Titulaire: Peugeot Citroën Automobiles SA, 92200 Neuilly sur Seine (FR)
(72) Inventeur: CUEFF, Jean-Yves, F-91320 Wissous (FR)
(86) Numéro de dépôt international: PCT/FR2000/000722
(87) Numéro de publication internationale: WO 2000/058705

(56) Documents cités:
- EP-A- 0 280 343
- DE-A- 4 028 561
- US-A- 5 265 468
- US-A- 5 541 840
- US-A- 5 828 298

## Description

L'invention concerne un procédé de contrôle de la fonction anti-blocage de roues (appelé ci-après ABR) de véhicules automobiles équipés d'un bloc ABR, au cours duquel on effectue des tests statiques sans rotation des roues pour contrôler la bonne marche du système ABR et des tests dynamiques avec rotation des roues pour contrôler le bon fonctionnement des capteurs de vitesse sur chaque roue et des électrovannes du système ABR.

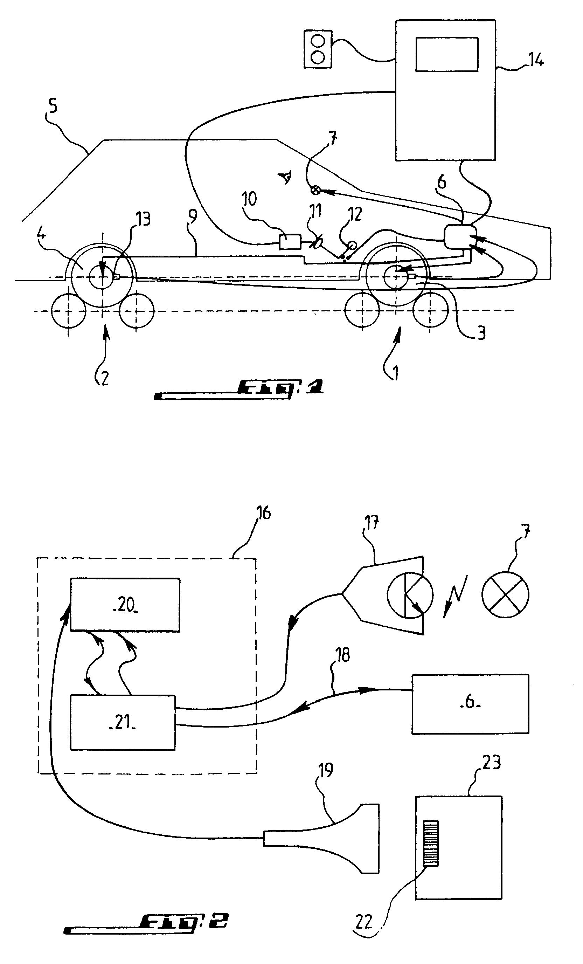

Dans le cadre des procédés de ce type, qui sont connus, les tests statiques et les tests dynamiques sont effectués sur des bancs de contrôle d'une architecture relativement complexe, illustrée sur la figure 1. Le banc de contrôle comporte une paire de rouleaux motorisés et instrumentés avant 1 et arrière 2 destinés à entraîner en rotation les roues avant 3 et arrière 4 du véhicule automobile 5 équipé d'un système ABR dont le bloc ABR est indiqué en 6 tandis que le voyant ABR d'avertissement du bon fonctionnement du système est situé sur la planche de bord du véhicule et porte la référence 7. La figure indique en outre respectivement en 9, 10, 11 et 12 leS tuyaux de frein, l'organe pousse-pédale, les contacts feu stop et la pédale de freinage. Chaque roue 3, 4 du véhicule est équipée d'un capteur de vitesse de rotation 13. Le banc de contrôle comporte une armoire de contrôle 14 destinée au dialogue avec le calculateur du bloc ABR 6 et le pilotage des rouleaux 1 et 2.

Au cours des tests statiques, on vérifie le fonctionnement correct du voyant ABR sur la planche de bord par un contrôle visuel, on contrôle le niveau de tension après la mise du contact du véhicule, la connexion du bloc à la prise diagnostic du véhicule, la conformité du type de bloc monté sur le véhicule, l'absence de défauts permanents dans le bloc ABR, la vision par le bloc ABR de l'enfoncement de la pédale de frein 12 (contact de feu stop 11) à l'aide du pousse-pédale 10, l'alimentation des bobines d'électrovanne du bloc ABR et l'alimentation du moteur de pompe hydraulique de ce bloc.

Pour effectuer les tests dynamiques, les bancs actuels de contrôle sont équipés de rouleaux capables d'entraîner les roues du véhicule l'une après l'autre, ainsi que de systèmes de mesure d'effort et de vitesse sur ces mêmes roues. Au cours de ces tests, on vérifie si la position de chacun des capteurs de vitesse (rotation indépendante de chacune des roues) est correcte, c'est-à-dire non inversée, si la réponse de chacun des capteurs de vitesse est correcte, à l'aide de capteurs de vitesse sur les rouleaux, et si le fonctionnement de chacune des électrovannes du bloc ABR est correct, à l'aide de capteurs d'effort sur les rouleaux.

Ce procédé de contrôle de la fonction ABR qui est connu et vient d'être décrit n'est plus capable d'assurer la cadence de production constamment croissante de véhicules équipés d'un système ABR. On connaît du document DE-A-4028 561, un procédé de contrôle conforme au préambule de la revendication 1

La présente invention a pour but de pallier cet inconvénient du procédé connu et propose un procédé qui permet de supprimer les bancs de contrôle actuels et d'augmenter la capacité de production de véhicules équipés d'un système ABR, tout en fiabilisant et simplifiant les procédures de contrôle.

Pour atteindre ce but, le procédé selon l'invention propose un procédé de conforme à l'objet de la revendication 1.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue schématique illustrant un agencement de contrôle de la fonction anti-blocage de roue de véhicule automobile, formé par un banc de contrôle, selon l'état de la technique ;
- la figure 2 est une vue schématique d'un banc de contrôle selon l'invention, pour l'exécution des tests dynamiques ;
- les figures 3 et 4 donnent un schéma des courbes de vitesse pour chacune des roues du véhicule respectivement en virage à droite et en virage à gauche ; et
- la figure 5 représente les courbes des vitesses de roue pendant le test des électrovannes sur piste.

Contrairement au procédé selon l'état de la technique, au cours duquel les tests statiques et les tests dynamiques sont effectués sur un banc de contrôle tel qu'illustré sur la figure 1, dans le cas du procédé selon l'invention, les tests statiques, ne demandant pas de faire tourner les roues du véhicule, sont effectués directement sur la ligne de montage, tandis que les tests dynamiques sont effectués soit au cours de l'essai sur piste ou, en cas d'absence de piste, sur un banc simplifié non instrumenté, comme on l'expliquera plus loin.

Les tests statiques sont effectués directement sur la ligne de montage du véhicule (non représentée) grâce à un agencement de contrôle spécifique illustré sur la figure 2. Cet agencement comporte essentiellement un dispositif de contrôle indiqué de façon générale en 16 et portable par un opérateur, un détecteur de lumière à phototransistor 17, relié par un câble au dispositif portable 16, une ligne spécialisée 18 permettant un dialogue entre le dispositif portable 16 et le calculateur du bloc ABR portant la référence 6 comme sur la figure 1, ainsi qu'un lecteur de code, par exemple de codes à barres, 19 également relié par un câble souple au dispositif portable.

Le dispositif portable est avantageusement du type connu sous la dénomination ODISSEE et comporte des moyens ordinateurs indiqués en 20 et un boîtier d'interface 21. Le détecteur de lumière 17 est destiné à donner des informations sur le voyant ABR portant la référence 7 comme sur la figure 1 et est relié aux moyens ordinateurs 20 par l'intermédiaire du boîtier d'interface 21. La liaison spécialisée 18, par exemple du type connu sous la dénomination RS 232, est également connectée aux moyens ordinateurs par le boîtier d'interface. Le lecteur 19 est destiné à la lecture du code indiqué en 22 du Livret de Contrôle 23 du véhicule. Le lecteur est directement relié aux moyens ordinateurs 20.

Les tests statiques effectués sur la ligne de montage sont identiques à ceux effectués actuellement sur le banc représenté sur la figure 1, sauf que le contrôle de l'allumage du voyant ABR 7 sur la planche de bord et le contrôle du type de bloc ABR 6 monté sur le véhicule sont automatisés et fiabilisés en utilisant le détecteur de lumière 17 et le lecteur de code à barres 19. En effet, grâce au détecteur de lumière 17 placé en regard du voyant ABR 7, on contrôle automatiquement que celui-ci s'allume à la mise du contact du véhicule et quand le dispositif portable 16 entre en dialogue avec le calculateur du bloc ABR 6, et qu'il s'éteint une fois ce dialogue terminé. Par l'intermédiaire du lecteur de code à barres 19, le dispositif portable reconnaît le code 22 du véhicule en cours de contrôle. En dialoguant avec le calculateur du bloc ABR 6, le dispositif portable peut vérifier si le bon type de bloc est monté ou pas.

Plus précisément, l'opérateur fait débuter les tests statiques en montant dans le véhicule avec le dispositif portable 16. Il place le détecteur de lumière 17 devant le voyant ABR et connecte la liaison spécialisée 18 au calculateur du bloc ABR 6, c'est-à-dire à la prise diagnostic de celui-ci. Puis, après avoir attendu le démarrage automatique du programme de test, il met le contact du véhicule. Le dispositif portable, à l'aide du détecteur de lumière 17, effectue un contrôle automatique de l'allumage du voyant ABR et de son extinction au bout d'un laps de temps prédéterminé de par exemple 3 secondes. Si le fonctionnement du voyant est correct, le dispositif portable procède à la reconnaissance du type du véhicule par lecture du code à barres 22 à l'aide du lecteur 19. Si le fonctionnement n'est pas correct, l'opérateur vérifie si le détecteur 17 est bien placé. S'il veut recommencer le test, il coupe le contact du véhicule pour répéter le contrôle automatique de l'allumage du voyant. S'il ne souhaite pas recommencer, ou si le fonctionnement est toujours incorrect, le résultat incorrect du test est indiqué sur le ticket de contrôle.

Après la reconnaissance réussie du type du véhicule, la communication avec le calculateur du bloc ABR 6 est initialisée et, si cette initialisation est correcte et après un contrôle du fonctionnement correct du calculateur et un contrôle par le détecteur de lumière 17 que le voyant 7 est allumé pendant toute la phase de dialogue avec le calculateur ABR, le dispositif portable 16 compare le résultat de la lecture du code à barres 22 au code du bloc ABR 6 qui lui a été communiqué par le calculateur de ce bloc ABR. S'il y a concordance des deux codes, signifiant que le bloc ABR 6 qui est monté sur le véhicule en train d'être contrôlé est bien celui destiné à ce véhicule, on effectue, de la manière connue en soi par le procédé connu de l'état de la technique, les tests statiques restants, à savoir le contrôle à l'aide du pousse-pédale 10 (figure 1), de la vision par le calculateur ABR de l'état du contacteur des feux stop qui indique si la pédale de frein est enfoncée ou pas, le contrôle de l'alimentation des bobines d'électrovannes du bloc ABR et le contrôle de l'alimentation du moteur de pompe hydraulique de ce bloc.

Il est à noter qu'à la fin du dialogue avec le calculateur ABR, le voyant ABR doit s'éteindre. On notera encore que chaque constation d'un fonctionnement incorrect au cours des tests offre la possibilité de répéter le test négatif. Par contre, le résultat incorrect pour au moins un des tests statiques sera indiqué sur le ticket de contrôle du véhicule.

Après que l'ensemble des tests a été effectué, le dispositif portable 16 est déconnecté du calculateur du bloc ABR 6, le détecteur de lumière 17 est récupéré et l'opérateur descend du véhicule avec le dispositif portable et le détecteur.

La durée des tests statiques effectuée de la manière décrite ci-dessus, conformément à l'invention, est de 20 secondes environ.

On décrira ci-après le déroulement des tests dynamiques tout d'abord sur piste. Ces tests impliquent un contrôle de l'information des capteurs de vitesse 13 associés aux roues du véhicule, de la position des capteurs et du fonctionnement des électrovannes.

Concernant les tests dynamiques nécessitant de faire tourner les roues du véhicule, en plus de la mise sous tension et du dialogue avec le bloc ABR 6, les tests des capteurs de vitesse de roue, indiqués en 13 sur la figure 1, sont identiques à ceux effectués actuellement sur les bancs du type illustré sur la figure 1. Par contre, les processus de contrôle des tests se déroulent d'une manière différente. Les tests des électrovannes en revanche sont simplifiés. Selon l'invention, on ne contrôle que le bon fonctionnement de chacune des électrovannes associées à chaque roue et non plus les efforts restitués au cours des différentes phases de fonctionnement du sytème ABR. En effet, le seul bon fonctionnement des électrovannes garantit la fonction ABR alors que les efforts mesurés sur les roues garantissent la fonction de freinage qui est contrôlée par ailleurs, notamment au cours de l'essai sur piste, pour l'ensemble des véhicules équipés ou non d'un système ABR.

On décrira ci-après le déroulement des tests dynamiques. Ces tests comportent un contrôle de l'information des capteurs de vitesse 13 associés aux roues du véhicule, de la position de ces capteurs et du fonctionnement des électrovannes. Ces tests s'effectuent en essai sur piste ou sur un banc à rouleaux simplifié, conforme à l'invention.

On décrira tout d'abord les tests dynamiques sur piste.

Le test de contrôle de l'information des capteurs de vitesse consiste à vérifier que les capteurs de vitesse donnent tous une information cohérente. Pour effectuer ce test, aussi bien sur piste que sur banc, l'opérateur monte dans le véhicule avec le dispositif portable 16, place le détecteur de lumière devant le voyant ABR 7, connecte le dispositif portable 16, à l'aide de la liaison spécialisée 18, à la prise diagnostic du véhicule, c'est-à-dire au calculateur du bloc ABR 6, pour permettre au dispositif portable de communiquer avec le calculateur. Puis il met le contact du véhicule, ce qui donne lieu à un contrôle automatique de l'allumage du voyant ABR et de son extinction au bout de 3 secondes. Ce contrôle n'est cependant pas obligatoire car il a déjà été effectué lors des tests statiques. Si le fonctionnement du voyant s'avère correct, on initialise la communication entre le dispositif portable et le calculateur ABR.

Lorsque les tests s'effectuent sur la piste d'essai, le contrôle de l'information des capteurs de vitesse nécessite de parcourir avec le véhicule une ligne droite d'une longueur connue. Pendant ce parcours, le dispositif portable interroge le calculateur du bloc ABR pour obtenir les informations sur la vitesse de chacune des roues et le temps correspondant écoulé et mémorise ces données. Pendant ce parcours, le voyant ABR est surveillé pour voir s'il reste bien allumé pendant la totalité du dialogue avec le calculateur ABR. Ensuite les données mémorisées dans le dispositif portable sont analysées.

Cette analyse des données consiste à vérifier si pendant tout le parcours sur la ligne droite dont la longueur est recalculée grâce aux vitesses et au temps écoulé, aucune des vitesses de roue ne diverge des vitesses des autres roues et n'est pas nulle. Dans l'affirmative, l'information donnée par les capteurs de vitesse est considérée comme étant cohérente et donc bonne. Par contre, si une des vitesses est différente des autres avant la fin de la ligne droite, l'information donnée par le capteur concerné est déclarée mauvaise. Dans ce cas, il faut envoyer le véhicule en révision pour effectuer une vérification ou pour remplacer le capteur défectueux.

Pour effectuer le contrôle de la position des capteurs de vitesse, on vérifie que chaque capteur de vitesse donne bien l'information sur la roue à laquelle il est associé, c'est-à-dire on vérifie si le branchement des capteurs aux fils du faisceau électrique est correct ou s'il y a inversion.

Lors de ce test, après initialisation du dialogue entre le dispositif portable et le calculateur du bloc ABR à l'arrêt du véhicule, on amène le véhicule à parcourir un virage serré à droite ou à gauche. Pendant ce virage, le dispositif portable acquiert et mémorise les vitesses de chacune des roues ainsi que le temps écoulé en dialoguant avec le calculateur ABR et analyse ensuite les données recueillies.

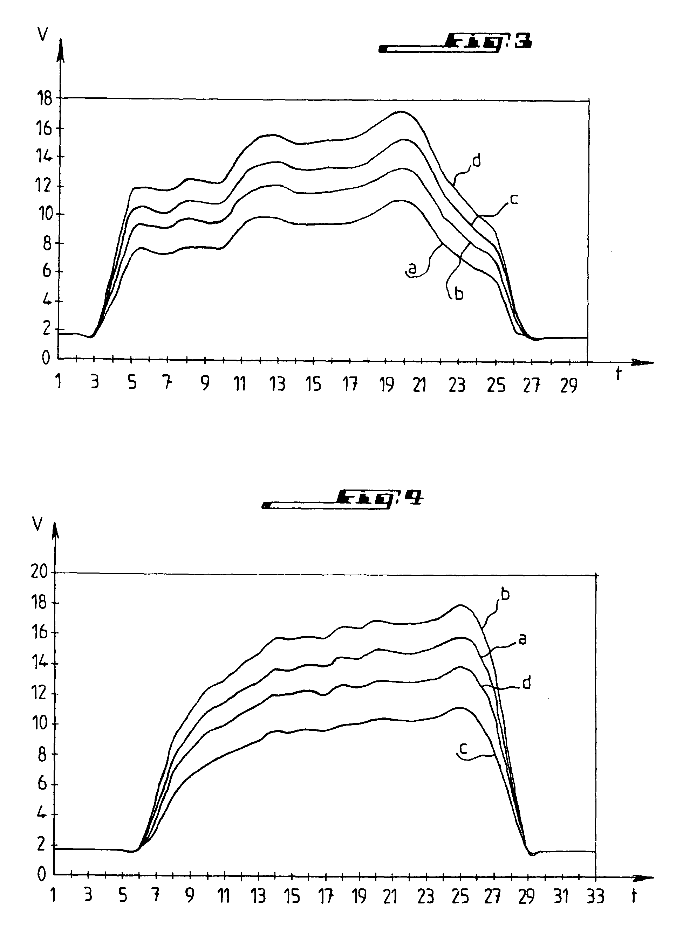

L'analyse de ces données consiste à vérifier si l'ordre des vitesses des différentes roues au cours du virage correspond, en tenant compte d'un écart minimal entre les vitesses, à un ordre prédéterminé. Cet écart minimal dépend du type du véhicule contrôlé. La position relative de la vitesse d'une roue dans l'ordre pré-établi et l'écart entre les vitesses sont fonction de l'empattement et de la voie du véhicule contrôlé. Les figures 3 et 4 donnent un schéma des courbes des vitesses établies par les capteurs, respectivement en virage à droite et en virage à gauche. Sur ces figures, le temps t est indiqué en abscisse et la vitesse V en ordonnée et les courbes a, b, c et d correspondent respectivement à la roue arrière droite, à la roue avant droite, à la roue arrière gauche et à la roue avant gauche. Si le véhicule effectue un virage à droite, l'ordre croissant des vitesses est le suivant : vitesse roue arrière droite, vitesse roue avant droite, vitesse roue arrière gauche, vitesse roue avant gauche. Si le véhicule effectue un virage à gauche, l'ordre croissant des vitesses est comme suit : vitesse roue arrière gauche, vitesse roue avant gauche, vitesse roue arrière droite, vitesse roue avant droite.

Si ces ordres sont respectés, la position des capteurs de vitesse est déclarée bonne. Sinon, des inversions sont signalées et le véhicule est renvoyé en révision.

Le contrôle des électrovannes a pour but de vérifier que chacune des électrovannes du bloc ABR agit bien sur la roue à laquelle elle est associée. En fait, ce test sert à vérifier qu'il n'y a pas d'inversion de branchement de tuyau au niveau du bloc ABR, du maître-cylindre ou des roues. Concernant le fonctionnement proprement dit des électrovannes, il est théoriquement garanti par un contrôle effectué chez le fournisseur.

Pour effectuer ce contrôle des électrovannes sur piste, après initialisation du dialogue entre le dispositif portable et le calculateur ABR à l'arrêt du véhicule, celui-ci est amené à effectuer un freinage en ligne droite pendant la durée nécessaire au test, le début et la fin du test étant signalés par des bips sonores. Pendant ce freinage, chacune des roues est freinée séparément par pilotage des électrovannes d'admission du bloc ABR et la vitesse des quatre roues est relevée. Grâce à ces vitesses de roues, on contrôle que la roue qui est freinée présente bien la vitesse minimale par rapport aux autres roues. Une fois qu'une roue a été freinée, elle est réaccélérée en la mettant en phase de détente par pilotage des électrovannes de détente et du moteur de pompe hyraulique du bloc ABR.

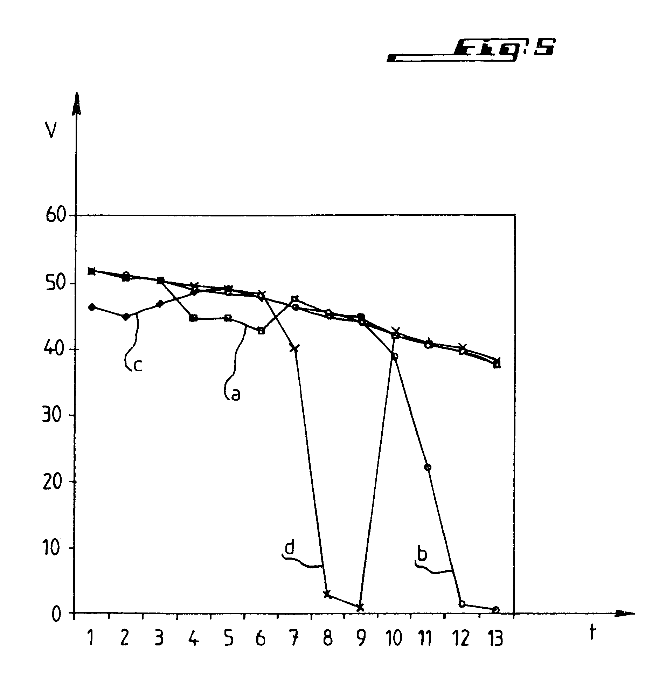

La figure 5 donne les vitesses de chacune des roues au cours d'un test de ce genre. Comme pour les figures 3 et 4, les courbes a, b, c et d correspondent respectivement à la roue arrière droite, la roue avant droite, la roue arrière gauche et la roue avant gauche. On voit que chaque courbe présente un minimum correspondant au freinage de la roue concernée.

Dans le cas particulier, l'ordre de freinage a été : roue arrière gauche, roue arrière droite, roue avant gauche et roue avant droite, chaque roue avant s'étant bloquée au cours de l'essai.

Si le test est correct pour les quatre roues, le véhicule est déclaré bon. Sinon les anomalies sont signalées et le véhicule est envoyé en révision.

On décrira ci-après le déroulement des tests dynamiques sur un banc à rouleaux simplifié, selon l'invention. Il est à noter que sur un banc simplifié, les vitesses de rotation des rouleaux d'entraînement des roues du véhicule sont connues et fixes et la vitesse de rotation de chacun des rouleaux est différente des autres pour permettre une identification de la position des capteurs de vitesse.

Comme lors des tests sur piste, avant chaque test, on initialise le dialogue avec le dispositif portable et le calculateur ABR à l'arrêt du véhicule. Pour contrôler la position des capteurs de vitesse, c'est-à-dire pour détecter une éventuelle inversion de connecteur au branchement ou de fils dans le faisceau électrique du véhicule, après l'initialisation du dialogue, on fait tourner les rouleaux du banc simultanément pendant un temps prédéterminé. Pendant la rotation des rouleaux, le dispositif portable 16 enregistre la vitesse de chaque roue et le temps correspondant écoulé, en dialoguant avec le calculateur. Les données mémorisées sont ensuite analysées.

L'analyse des données consiste à vérifier si la vitesse indiquée par chacun des capteurs de vitesse correspond à la vitesse de rotation connue du rouleau correspondant, chaque rouleau ayant une vitesse différente des autres. Si cela est le cas, la position des capteurs de vitesse est déclarée bonne. Par contre, si une des vitesses ne correspond pas à celle du rouleau d'entraînement concerné, il y a inversion et celle-ci est signalée et le véhicule est envoyé en révision.

Pour effectuer le contrôle de l'information des capteurs de vitesse, après initialisation du dialogue entre le dispositif portable et le calculateur ABR à l'arrêt du véhicule, on fait tourner les rouleaux du banc simultanément pendant un temps connu. Pendant la rotation des rouleaux, le dispositif portable enregistre la vitesse de chacune des roues ainsi que le temps écoulé correspondant, en dialoguant avec le calculateur. Les données ainsi recueillies et mémorisées sont analysées.

L'analyse de ces données consiste à vérifier si la vitesse indiquée par chacun des capteurs de vitesse correspond à celle du rouleau associé. Si cela est le cas, l'information donnée par le capteur de vitesse est considérée comme bonne. Par contre si l'une des vitesses ne correspond pas à celle du rouleau concerné, le capteur correspondant est déclaré mauvais et le véhicule est envoyé en révision.

Pour effectuer le contrôle des électrovannes sur le banc simplifié, on procède de la même manière que sur piste, mais ce sont les rouleaux qui entraînent les roues du véhicule. Le test consiste alors à vérifier si la vitesse de la roue freinée est inférieure à celle correspondant à la vitesse de rotation connue du rouleau associé.

## Revendications

1. Procédé de contrôle de la fonction antiblocage de roue (ABR) d'un véhicule automobile équipé d'un bloc ABR, au cours duquel on effectue des tests statiques sans rotation des roues pour contrôler la bonne marche du système ABR et des tests dynamiques avec rotation des roues pour contrôler le bon fonctionnement des capteurs de vitesse sur chaque roue et des électrovannes du système ABR, les tests statiques étant effectués sur la ligne de montage, **caractérisé en ce que** :
- un dispositif portable (16) de contrôle est connecté au calculateur du bloc ABR et dialogue avec celui-ci, ,
- un détecteur de lumière (17) est placé en face d'un voyant ABR (7) du véhicule le détecteur de lumière étant relié au dispositif de contrôle,
- l'on effectue les tests dynamiques au cours d'essais sur piste ou sur un banc à rouleaux d'entraînement simultané des quatre roues,
- par l'intermédiaire du détecteur de lumière, le dispositif de contrôle effectue un contrôle automatique de l'allumage du voyant ABR (7) pendant un intervalle de temps prédéterminé à la mise du contact du véhicule et lors du dialogue avec le calculateur du bloc ABR (6).

2. Procédé selon la revendication 1, **caractérisé en ce que** l'on utilise comme dispositif portable de contrôle un dispositif (16) pourvu de moyens ordinateurs.

3. Procédé selon l'une des revendications 1 ou 2, **caractérisé en ce que**, lors des tests statiques sur la ligne de montage, un contrôle du type de bloc ABR (6) monté sur le véhicule est automatisé.

4. Procédé selon la revendication 3, **caractérisé en ce que** l'on contrôle le type du bloc ABR (6) monté sur le véhicule à l'aide d'un lecteur (19) du code du véhicule, par comparaison du code lu avec le code du bloc ABR (6) communiqué par le calculateur du bloc ABR (6) au dispositif portable (16).

5. Procédé selon l'une des revendications 1 à 4, **caractérisé en ce que**, lors des tests dynamiques, en ce qui concerne les électrovannes, on ne contrôle que le bon fonctionnement de chacune des électrovannes associées à chacune des roues du véhicule et la conformité de raccordement des tuyaux de frein.

6. Procédé selon l'une des revendications précédentes, **caractérisé en ce que**, pour vérifier si tous les capteurs de vitesse (13) donnent une information cohérente, lors des tests dynamiques sur piste, on établit une liaison de dialogue entre le calculateur du bloc ABR (6) et le dispositif portable (16), on fait parcourir au véhicule sur la piste une ligne droite d'une longueur prédéterminée, on établit pendant ce parcours la vitesse de chacune des roues ainsi que le temps écoulé et on conclut que les informations des capteurs de vitesse (13) sont cohérentes si aucune des vitesses de roue ne diverge des autres.

7. Procédé selon l'une des revendications 1 à 6, **caractérisé en ce que**, pour effectuer un contrôle du branchement correct des capteurs de vitesse (13) aux fils dans le faisceau électrique du véhicule, lors des tests dynamiques sur piste, on établit une liaison de dialogue entre le dispositif portable (16) et le calculateur du bloc ABR (6), on parcourt avec le véhicule un virage serré à droite ou à gauche, on établit la vitesse de chacune des roues et le temps écoulé et on considère que le branchement est correct si l'ordre croissant des vitesses des roues correspond à un ordre prédéterminé de référence.

8. Procédé selon l'une des revendications 1 à 7, **caractérisé en ce que**, pour contrôler que chacune des électrovannes du bloc (ABR) agit sur la roue à laquelle elle est associée, pendant les tests sur piste, on établit une liaison de dialogue entre le dispositif portable (16) et le calculateur du bloc ABR (6), on effectue un freinage successif de chacune des roues en ligne droite pendant la durée nécessaire aux tests, on établit la vitesse de chacune des roues et on contrôle que la roue freinée présente la vitesse la plus faible parmi les vitesses des roues.

9. Procédé selon l'une des revendications 1 à 5, **caractérisé en ce que**, pour vérifier si les capteurs de vitesse (13) donnent tous une information cohérente, lors des tests dynamiques sur un banc de contrôle, on établit une liaison de dialogue entre le calculateur du bloc ABR (6) et le dispositif portable (16), on fait tourner les rouleaux du banc simultanément pendant un temps prédéterminé et on considère les informations des capteurs (13) comme étant cohérentes si la vitesse indiquée pour chacun des capteurs de vitesse correspond à la vitesse de rotation connue des rouleaux d'entraînement correspondants.

10. Procédé selon la revendication 9, **caractérisé en ce que** la vitesse de rotation des rouleaux d'entraînement d'une roue du véhicule en train d'être contrôlé est différente des vitesses de rotation des rouleaux d'entraînement des autres roues.

11. Procédé selon l'une des revendications 1 à 5 ou 9 ou 10, **caractérisé en ce que**, pour effectuer un contrôle du branchement correct des capteurs de vitesse (13) aux fils du faisceau électrique du véhicule, lors des tests dynamiques sur le banc de contrôle, on établit une liaison de dialogue entre le dispositif portable (16) et le calculateur du bloc ABR (6), on fait tourner les rouleaux du banc simultanément pendant un temps prédéterminé, on établit la vitesse de chacune des roues du véhicule et le temps écoulé et on considère le branchement comme étant correct si la vitesse indiquée pour chacun des capteurs correspond à la vitesse de rotation connue des rouleaux d'entraînement correspondants.

12. Procédé selon l'une des revendications 1 à 5 ou 9 à 11, **caractérisé en ce que**, pour contrôler que chacune des électrovannes du système ABR agit sur la roue à laquelle elle est associée, pendant les tests sur un banc de contrôle, on établit une liaison de dialogue entre le dispositif portable (16) et le calculateur du bloc ABR (6), on met en rotation les roues du véhicule par les rouleaux du banc, on effectue un freinage, avec freinage séparé de chaque roue, et on considère que chacune des électrovannes du bloc ABR (6) agit sur la bonne roue si la vitesse de chaque roue frein-ée est inférieure à celle correspondant à la vitesse de rotation connue du rouleau associé.

13. Procédé selon la revendication 9, **caractérisé en ce que** le déroulement des tests dynamiques est effectué alors que les vitesses de rotation des rouleaux d'entraînement des roues sont connues et fixes et la vitesse de rotation de chacun des rouleaux est différente des autres.

## Claims

1. A method for checking the anti-lock braking system (ABS) function of a motor vehicle equipped with an ABS unit, during which method static tests with no rotation of the wheels are carried out in order to check correct operation of the ABS and dynamic tests with rotation of the wheels are carried out in order to check correct functioning of speed sensors on each wheel and of solenoid valves of the ABS, the static tests being carried out on the assembly line, **characterised in that**:
- a portable checking device (16) is connected to the ABS unit computer and communicates therewith,
- a light detector (17) is placed opposite to an ABS signal light (7) of the vehicle, the light detector being connected to the checking device,
- the dynamic tests are carried out during test drives on a track or on a test bench with rollers that simultaneously drive the four wheels,
- using the light detector, the checking device automatically checks the operation of the ABS signal light (7) for a predetermined time interval after the vehicle has been started and during communication with the computer of the ABS unit (6).

2. The method according to claim 1, **characterised in that** a device (16) provided with data processing means is used as the portable checking device.

3. The method according to either claim 1 or claim 2, **characterised in that** the type of ABS unit (6) mounted on the vehicle is checked automatically during the static tests on the assembly line.

4. The method according to claim 3, **characterised in that** the type of ABS unit (6) mounted to the vehicle is checked using a vehicle code reader (19) by comparing of the read code with the code of the ABS unit (6) communicated by the computer of the ABS unit (6) to the portable device (16).

5. The method according to any one of claims 1 to 4, **characterised in that**, as far as the solenoid valves are concerned, only correct functioning of each of the solenoid valves associated with each of the wheels of the vehicle and compliance of the brake line connection are checked during dynamic tests.

6. The method according to any one of the preceding claims, **characterised in that**, during dynamic test drives, in order to check whether all the speed sensors (13) provide consistent information, a communications link is established between the computer of the ABS unit (6) and the portable device (16), the vehicle is made to travel along the track in a straight line over a predetermined distance, during this travel the speed of each of the wheels and the time elapsed are established and it is concluded that the information provided by the speed sensors (13) is consistent if none of the wheel speeds differs from the others.

7. The method according to any one of claims 1 to 6, **characterised in that**, during dynamic test drives, in order to check that the speed sensors (13) are properly connected to the wires of the vehicle cable harness, a communications link is established between the portable device (16) and the computer of the ABS unit (6), the vehicle makes a sharp left- or righthand turn, the speeds of each of the wheels and the time elapsed are established and the connection is considered to be correct if the ascending order of the speed of the wheels corresponds to a predetermined reference order.

8. The method according to any one of claims 1 to 7, **characterised in that**, during test drives, in order to check that each of the solenoid valves of the (ABS) unit acts on the wheel with which it is associated, a communications link is established between the portable device (16) and the computer of the ABS unit (6), successive braking of each of the wheels is carried out in a straight line for the duration required for the tests, the speeds of each of the wheels are established and it is checked that the braked wheel displays the lowest speed of all the wheel speeds.

9. The method according to any one of claims 1 to 5, **characterised in that**, during dynamic tests on a control test bench, in order to check whether the speed sensors (13) all provide consistent information, a communications link is established between the computer of the ABS unit (6) and the portable device (16), the rollers of the bench are rotated simultaneously for a predetermined time and the information from the sensors (13) is considered to be consistent if the speed indicated for each of the speed sensors corresponds to the known rotation speed of the corresponding driving rollers.

10. The method according to claim 9, **characterised in that** the rotation speeds of the rollers driving a wheel of the vehicle being checked are different from the rotation speeds of the rollers driving the other wheels.

11. The method according to any one of claims 1 to 5, or 9, or 10, **characterised in that**, during dynamic tests on the control test bench, in order to check that the speed sensors (13) are properly connected to the wires of the vehicle cable harness, a communications link is established between the portable device (16) and the computer of the ABS unit (6), the rollers of the bench are rotated simultaneously for a predetermined time, the speed of each of the wheels of the vehicle and the time elapsed are established and the connection is considered to be correct if the speeds indicated for each of the sensors corresponds to the known rotation speed of the corresponding driving rollers.

12. The method according to any one of claims 1 to 5, or 9 to 11, **characterised in that**, during tests on a control test bench, in order to check that each of the solenoid valves of the ABS system acts on the wheel with which it is associated, a communications link is established between the portable device (16) and the computer of the ABS unit (6), the wheels of the vehicle are rotated by the rollers of the bench, braking with separate braking of each wheel is carried out and it is considered that each of the solenoid valves of the ABS unit (6) acts on the correct wheel if the speed of each braked wheel is less than that corresponding to the known rotation speed of the corresponding roller.

13. The method according to claim 9, **characterised in that** the dynamic tests are carried out when the speeds of rotation of the rollers driving the wheels are known and fixed and the rotation speeds of each of the rollers are different from each others.

## Patentansprüche

1. Verfahren zur Überprüfung der Antiblockierfunktion (ABS-Funktion) eines mit einer ABS-Steuereinheit ausgestatteten Kraftfahrzeugs, bei dem statische Prüfungen ohne Rotation der Räder zur Überprüfung der ordnungsgemäßen Funktion des ABS-Systems und dynamische Prüfungen mit Rotation der Räder zur Überprüfung der ordnungsgemäßen Funktion der Raddrehzahlsensoren an jedem Rad und der Magnetventile des ABS-Systems durchgeführt werden, wobei die statischen Prüfungen auf der Montageanlage erfolgen, **dadurch gekennzeichnet, dass**:
- ein tragbares Prüfgerät (16) an den Rechner der ABS-Steuereinheit angeschlossen wird und mit diesem kommuniziert;
- ein Lichtdetektor (17) vor eine ABS-Kontrollleuchte (7) des Fahrzeugs gesetzt wird, wobei der Lichtdetektor mit dem Prüfgerät verbunden ist;
- die dynamischen Prüfungen während der Testfahrten oder auf einem Prüfstand mit Rollen zum gleichzeitigen Antrieb der vier Räder durchgeführt werden;
- das Prüfgerät mit Hilfe des Lichtdetektors eine automatische Überprüfung des Aufleuchtens der ABS-Kontrollleuchte (7) während eines beim Einschalten der Zündung des Fahrzeugs vorbestimmten Zeitraums und während der Kommunikation mit dem Rechner der ABS-Steuereinheit (6) durchführt.

2. Verfahren gemäß Anspruch 1, **dadurch gekennzeichnet, dass** als tragbares Prüfgerät ein mit Rechnermitteln ausgestattetes Gerät (16) benutzt wird.

3. Verfahren gemäß einem der Ansprüche 1 oder 2, **dadurch gekennzeichnet, dass** während der statischen Prüfungen auf der Montageanlage automatisch eine Überprüfung des Typs der ABS-Steuereinheit (6) erfolgt, die in das Fahrzeug eingebaut ist.

4. Verfahren gemäß Anspruch 3, **dadurch gekennzeichnet, dass** der Typ der in das Fahrzeug eingebauten ABS-Steuereinheit (6) mit Hilfe eines Geräts zum Lesen (19) des Fahrzeugcodes durch Vergleich des gelesenen Codes mit dem Code der ABS-Steuereinheit (6), der von dem Rechner der ABS-Steuereinheit (6) an das tragbare Prüfgerät (16) übertragen wird, überprüft wird.

5. Verfahren gemäß einem der Ansprüche 1 bis 4, **dadurch gekennzeichnet, dass** während der dynamischen Prüfungen die Magnetventile betreffend nur die ordnungsgemäße Funktion jedes der Magnetventile überprüft wird, die jedem der Räder des Fahrzeugs zugeordnet sind, sowie die Konformität des Anschlusses der Bremsschläuche.

6. Verfahren gemäß einem der vorangegangenen Ansprüche, **dadurch gekennzeichnet, dass**, um zu überprüfen, ob alle Raddrehzahlsensoren (13) eine kohärente Information liefern, während der dynamischen Prüfungen auf der Straße eine Kommunikationsverbindung zwischen dem Rechner der ABS-Steuereinheit (6) und dem tragbaren Prüfgerät (16) hergestellt wird, man das Fahrzeug auf der Straße eine gerade Strecke einer vorbestimmten Länge fahren lässt, während dieser Fahrt die Geschwindigkeit jedes Rads sowie die abgelaufene Zeit gemessen werden und man schlussfolgert, dass die Informationen der Raddrehzahlsensoren (13) kohärent sind, wenn keine der Radgeschwindigkeiten von den anderen abweicht.

7. Verfahren gemäß einem der Ansprüche 1 bis 6, **dadurch gekennzeichnet, dass**, um eine Überprüfung des korrekten Anschlusses der Raddrehzahlsensoren (13) an die Drähte des Fahrzeugkabelbaums durchzuführen, während der dynamischen Prüfungen auf der Straße eine Kommunikationsverbindung zwischen dem tragbaren Prüfgerät (16) und dem Rechner der ABS-Steuereinheit (6) hergestellt wird, mit dem Fahrzeug eine enge Rechts-oder Linkskurve gefahren wird, die Geschwindigkeit jedes Rads und die abgelaufene Zeit gemessen werden und der Anschluss als korrekt gilt, wenn die ansteigende Reihenfolge der Radgeschwindigkeiten einer vorbestimmten Bezugsreihenfolge entspricht.

8. Verfahren gemäß einem der Ansprüche 1 bis 7, **dadurch gekennzeichnet, dass**, um zu überprüfen, ob jedes der Magnetventile der Steuereinheit (ABS) auf das Rad wirkt, dem es zugeordnet ist, während der Testfahrten eine Kommunikationsverbindung zwischen dem tragbaren Prüfgerät (16) und dem Rechner der ABS-Steuereinheit (6) hergestellt wird, nacheinander jedes Rad auf gerader Strecke während der für die Prüfungen notwendigen Dauer gebremst wird, die Geschwindigkeit jedes Rads gemessen wird und überprüft wird, dass das gebremste Rad die niedrigste Geschwindigkeit unter den Radgeschwindigkeiten aufweist.

9. Verfahren gemäß einem der Ansprüche 1 bis 5, **dadurch gekennzeichnet, dass**, um zu überprüfen, ob alle Raddrehzahlsensoren (13) eine kohärent Information liefern, während der dynamischen Prüfungen auf einem Prüfstand eine Kommunikationsverbindung zwischen dem Rechner der ABS-Steuereinheit (6) und dem tragbaren Prüfgerät (16) hergestellt wird, man die Rollen des Prüfstands gleichzeitig während eines vorbestimmten Zeitraums laufen lässt und die Daten der Raddrehzahlsensoren (13) als kohärent gelten, wenn die für jeden der Raddrehzahlsensoren angegebene Geschwindigkeit der bekannten Rotationsgeschwindigkeit der entsprechenden Antriebsrollen entspricht.

10. Verfahren gemäß Anspruch 9, **dadurch gekennzeichnet, dass** die Rotationsgeschwindigkeit der Antriebsrollen eines Rads des Fahrzeugs, das im Begriff ist, überprüft zu werden, von den Rotationsgeschwindigkeiten der Antriebsrollen der anderen Räder abweicht.

11. Verfahren gemäß einem der Ansprüche 1 bis 5 oder 9 oder 10, **dadurch gekennzeichnet, dass**, um eine Überprüfung des korrekten Anschlusses der Raddrehzahlsensoren (13) an die Drähte des Fahrzeugkabelbaums durchzuführen, während der dynamischen Prüfungen auf dem Prüfstand eine Kommunikationsverbindung zwischen dem tragbaren Prüfgerät (16) und dem Rechner der ABS-Steuereinheit (6) hergestellt wird, man die Rollen des Prüfstands gleichzeitig während eines vorbestimmten Zeitraums laufen lässt, die Geschwindigkeit jedes der Fahrzeugräder und die abgelaufene Zeit gemessen werden und der Anschluss als korrekt gilt, wenn die für jeden der Sensoren angegebene Geschwindigkeit der bekannten Rotationsgeschwindigkeit der entsprechenden Antriebsrollen entspricht.

12. Verfahren gemäß einem der Ansprüche 1 bis 5 oder 9 bis 11, **dadurch gekennzeichnet, dass**, um zu überprüfen, ob jedes der Magnetventile des ABS-Systems auf das Rad wirkt, dem es zugeordnet ist, während der Prüfungen auf einem Prüfstand eine Kommunikationsverbindung zwischen dem tragbaren Prüfgerät (16) und dem Rechner der ABS-Steuereinheit (6) hergestellt wird, die Fahrzeugräder durch die Rollen des Prüfstands in Drehung versetzt werden, eine Bremsung mit Einzelbremsung jedes Rads durchgeführt wird und jedes der Magnetventile der ABS-Steuereinheit (6) als auf das richtige Rad wirkend gilt, wenn die Geschwindigkeit jedes gebremsten Rads niedriger ist als diejenige, die der bekannten Rotationsgeschwindigkeit der zugeordneten Rolle entspricht.

13. Verfahren gemäß Anspruch 9, **dadurch gekennzeichnet, dass** die dynamischen Prüfungen durchgeführt werden, während die Rotationsgeschwindigkeiten der Antriebsrollen der Räder bekannt und feststehend sind und die Rotationsgeschwindigkeit jeder der Rollen von den anderen abweicht.
